# FASCICULE DE BREVET EUROPEEN

(11) **EP 0 954 391 B1**
(45) Date de publication et mention de la délivrance du brevet: **02.10.2002**
(21) Numéro de dépôt: 98904135.5
(22) Date de dépôt: 14.01.1998
(51) Int. Cl.: B09B 1/00

(54) **PROCEDE POUR LE STOCKAGE EN DECHARGE, D'UN RESIDU SOLIDE CONTENANT DES METAUX LOURDS**
VERFAHREN ZUM LAGERN VON SCHWERMETALLE ENTHALTENDEN, FESTEN RÜCKSTÄNDEN AUF EINER DEPONIE
METHOD FOR PILE DUMPING OF HEAVY METAL CONTAINING SOLID REFUSE

(30) Priorité: 27.01.1997 BE 9700075
(43) Date de publication de la demande: 10.11.1999
(73) Titulaire: SOLVAY (Société Anonyme), 1050 Bruxelles (BE)
(72) Inventeur: NINANE, Léon, F-54110 Dombasle-sur-Meurthe (FR)
(74) Mandataire: Dufrasne, Eugène
(86) Numéro de dépôt international: EP9800384
(87) Numéro de publication internationale: WO98032547

(56) Documents cités:
- WO-A-93/02014
- WO-A-93/04983
- DE-A- 4 114 616
- DE-A- 4 318 613
- US-A- 4 857 203
- US-A- 4 950 409
- US-A- 5 190 406

## Description

La présente invention est relative à l'élimination des résidus solides tels que des déchets industriels, des ordures ménagères, municipales ou hospitalières, ou des cendres volantes de centrales thermiques pour la production d'électricité.

Elle concerne plus particulièrement le stockage, en décharge, de résidus solides contaminés par des métaux lourds.

L'industrie et les activités domestiques produisent une quantité importante de déchets, contaminés par des métaux lourds. C'est en particulier le cas des cendres volantes des centrales thermiques de production d'électricité, des cendres volantes générées dans les centrales d'incinération des déchets urbains et hospitaliers ainsi que des résidus solides provenant de l'épuration des fumées produites par ces centrales d'incinération. Un moyen largement utilisé pour éliminer ces déchets consiste à les déverser dans des décharges ouvertes à l'air libre. Bien que les métaux lourds soient généralement présents dans ces déchets à l'état de composés basiques (hydroxydes) normalement insolubles dans l'eau, un stockage de longue durée risque néanmoins d'entraîner, à la longue, une dissolution progressive de ces métaux lourds dans les eaux acides provenant des précipitations atmosphériques et le passage de ceux-ci dans la nappe phréatique ou les cours d'eau.

Dans le document US-A-4 950 409 on propose un procédé d'inertage du plomb et du cadmium dans des déchets solides, ce procédé consistant à mélanger les déchets avec un réactif sélectionné parmi le carbonate de calcium, le carbonate de magnésium ou le carbonate mixte de calcium et de magnésium, de manière à former des composés insolubles du plomb ou du cadmium. Ce procédé connu présente toutefois l'inconvénient de nécessiter une étape de traitement des déchets avec le réactif, avant l'envoi de ce dernier à la décharge. Il implique par ailleurs d'adapter les granulométries respectives des déchets et du réactif pour permettre un mélange homogène et nécessite de ce fait un appareillage approprié comprenant généralement un broyeur et un malaxeur, ce qui constitue un autre inconvénient.

Dans le document DE-A-4318613, on décrit un procédé de stockage de métaux lourds dans une décharge, qui consiste à mélanger les métaux lourds, à l'état métallique soluble avec des scories basiques provenant d'aciéries. Cet autre procédé connu n'est cependant pas adapté lorsque les métaux lourds sont à l'état d'hydroxydes, ce qui est généralement le cas des résidus solides provenant de l'industrie et des activités domestiques.

L'invention remédie aux inconvénients précités des procédés connus qui viennent d'être décrits, en fournissant un procédé nouveau qui réalise le stockage, en décharge, de résidus solides contaminés par des métaux lourds à l'état d'hydroxyde, sans nécessiter un broyage et un malaxage, la décharge pouvant être soumise à des pluies acides.

L'invention concerne dès lors un procédé pour le stockage d'un résidu solide contenant des métaux lourds à l'état d'hydroxydes métalliques, insolubles dans l'eau, selon lequel on déverse le résidu dans une décharge soumise à des précipitations atmosphériques, on sélectionne une décharge soumise à des pluies acides et on dispose dans la décharge, au-dessous du résidu solide, une couche de carbonate de métal alcalino-terreux, perméable à l'eau.

Dans le procédé selon l'invention, on entend par décharge, une surface, généralement à l'air libre, pour l'épandage de déchets. Elle consiste habituellement en une dépression naturelle anticlinale du sol ou une excavation artificielle telle qu'une carrière désaffectée, par exemple.

Le résidu solide consiste généralement en une matière granuleuse ou pulvérulente. Son origine n'est pas critique.

On entend désigner par métaux lourds, les métaux dont la masse spécifique est au moins égale à 5 g/cm³, ainsi que le béryllium, l'arsenic, le sélénium et l'antimoine, conformément à la définition généralement admise (Heavy Metals in Wastewater and Sludge Treatment Processes; Vol. I, CRC Press, Inc; 1987; page 2).

Selon l'invention, on dispose une couche de carbonate de métal alcalino-terreux dans la décharge, sous le résidu solide, de manière à isoler la paroi de la décharge (principalement le fond de celle-ci) du résidu susjacent. Le carbonate de métal alcalino-terreux peut être, par exemple, le carbonate de calcium, le carbonate de magnésium, un carbonate mixte de calcium et de magnésium ou un mélange de carbonate de calcium et de carbonate de magnésium. Le carbonate de calcium est préféré, celui-ci pouvant avantageusement être du calcaire. La couche de carbonate de métal alcalino-terreux doit être perméable à l'eau, notamment aux eaux de pluie et de ruissellement. Elle doit dès lors être mise en oeuvre à l'état de fragments, de granules ou d'une poudre. Elle a pour fonction de réagir avec les métaux lourds qui viendraient à se dissoudre dans de l'eau, pour précipiter ceux-ci à l'état de composés insolubles. Dans un mode de réalisation avantageux du procédé selon l'invention, la couche de carbonate de métal alcalino-terreux est à l'état de fragments. La granulométrie de la couche de carbonate de métal alcalino-terreux n'est pas critique, mais doit respecter un compromis entre, d'une part, une réactivité élevée vis-à-vis des métaux lourds (cette réactivité étant favorisée par une granulométrie fine) et, d'autre part, la facilité et le coût de sa manutention (favorisés par une granulométrie grossière). D'une manière générale, le diamètre moyen de la couche de carbonate de métal alcalino-terreux (défini par tamisage) peut être de quelques microns à quelques centimètres, par exemple de 100 microns à 10 cm. En pratique, pour une question de coût et de facilité de manutention, on sélectionne avantageusement un diamètre moyen de 1 à 5 cm.

Selon une variante préférée de ce mode de réalisation, la couche de carbonate de métal alcalino-terreux est à l'état de fragments de 1 à 5 cm de diamètre.

Dans le procédé selon l'invention, la couche de carbonate de métal alcalino-terreux réalise un filtre qui, en cas de dissolution accidentelle des métaux lourds du résidu solide dans une eau de pluie ou de ruissellement acide, arrête ces métaux en les précipitant à l'état de composés insolubles dans l'eau, empêchant ainsi leur passage dans la nappe phréatique ou les cours d'eau.

Dans une forme de réalisation particulière du procédé selon l'invention, la couche de carbonate de métal alcalino-terreux est formée d'un rebut d'une opération d'enrichissement mécanique d'un minerai de calcaire. L'enrichissement mécanique des minerais de calcaire est bien connu et comprend généralement un broyage du minerai, suivi d'un tamisage dans lequel on sépare une masse enrichie en calcaire et un rebut, à teneur plus faible en calcaire.

Dans une autre forme de réalisation particulière du procédé selon l'invention, on imperméabilise la paroi de la décharge (principalement le fond de celle-ci). A cet effet, on peut faire usage d'une décharge dont la paroi est constituée, de manière naturelle, d'une couche d'argile imperméable à l'eau. En variante, on recouvre la paroi de la décharge d'une feuille souple en matière plastique, imperméable à l'eau, par exemple en polyéthylène haute densité.

Dans une autre forme de réalisation du procédé selon l'invention, on dispose le résidu solide dans la décharge en lits successifs alternant avec des couches de carbonate de métal alcalino-terreux.

Dans le procédé selon l'invention, la couche de carbonate de métal alcalino-terreux peut éventuellement contenir d'autres composés basiques insolubles dans l'eau. Des exemples de tels composés sont les oxydes et les hydroxydes des métaux alcalino-terreux, notamment la chaux. Dans cette forme de réalisation de l'invention, la composition de la couche de carbonate de métal alcalino-terreux doit toutefois être réglée pour que de l'eau, de pH initialement neutre (égal à 7) présente, après traversée de ladite couche, une valeur de pH inférieure à 11 (de préférence à 10), les valeurs de 7 à 9,5 (de préférence de 8 à 9) étant spécialement recommandées.

Dans une forme d'exécution particulière du procédé selon l'invention, on mélange un liant hydraulique au résidu solide, dans le but de le stabiliser et de réduire sa perméabilité à l'eau.

Dans cette forme d'exécution du procédé selon l'invention, la quantité de liant hydraulique doit être suffisante pour former une masse solide compacte avec le résidu solide et de l'eau. La quantité optimum de liant hydraulique va dépendre de la composition du résidu et du liant hydraulique mis en oeuvre. Elle doit par conséquent être déterminée, dans chaque cas particulier, par un travail de routine.

Le liant hydraulique est avantageusement du ciment Portland.

L'invention s'applique invariablement à tous les résidus solides contenant des métaux lourds, tels que des résidus industriels ou des résidus urbains. Elle s'applique notamment aux mâchefers des fours d'incinération des résidus urbains et aux mâchefers produits dans les centrales thermiques.

L'invention s'applique également au stockage d'un résidu solide comprenant des cendres volantes de l'incinération de déchets ménagers ou hospitaliers, ainsi que, de manière préférée, au stockage d'un résidu solide provenant de l'alcalinisation d'une solution aqueuse de chlorure de sodium, contaminée par des métaux lourds. Dans cette dernière application du procédé selon l'invention, l'origine de la solution aqueuse de chlorure de sodium n'est pas critique. Celle-ci peut par exemple être une solution aqueuse produite en traitant une fumée d'incinération de déchets ménagers ou hospitaliers, au moyen d'une solution aqueuse d'un composé sélectionné parmi l'hydroxyde de sodium, le carbonate de sodium et le bicarbonate de sodium, comme décrit par exemple dans la demande de brevet européen 0 595 861 [SOLVAY (Société Anonyme)]. Elle peut aussi être une solution obtenue par dispersion dans de l'eau, d'un produit solide recueilli du traitement, au moyen d'une poudre de bicarbonate de sodium, d'une fumée d'incinération de déchets ménagers ou hospitaliers, comme décrit dans la demande de brevet européen 0 603 218 [SOLVAY (Société Anonyme)].

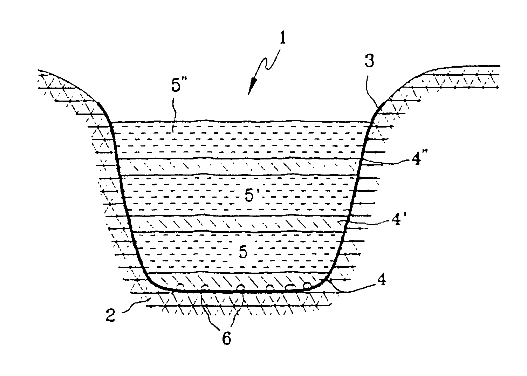

Des particularités et détails de l'invention vont apparaître au cours de la description suivante de la figure unique du dessin annexé, qui représente une décharge dans laquelle une forme de réalisation particulière du procédé selon l'invention a été mise en oeuvre.

La décharge, repérée par la notation de référence 1, consiste par exemple en une fosse d'une ancienne carrière désaffectée, généralement une carrière de sable ou de calcaire. Elle est entièrement recouverte d'une feuille souple 3 en matière plastique, par exemple en polyéthylène haute densité. La feuille 3 a pour fonction d'empêcher que les eaux de pluie ou de ruissellement qui atteignent la décharge, puissent s'infiltrer dans le terrain sous-jacent et atteindre la nappe phréatique. Des drains 6 posés sur le fond de la décharge assure l'évacuation des lixiviats.

Selon l'invention, on dépose dans le fond de la décharge, sur la feuille 3, une couche 4 de blocs de calcaire, avant d'y décharger une masse de déchets 5 contaminée par des métaux lourds. La masse de déchets 5 peut par exemple comprendre un résidu solide recueilli d'une usine d'incinération d'ordures ménagères, contenant les métaux lourds à l'état d'hydroxydes métalliques sensiblement insolubles dans l'eau. Des résidus solides de ce type sont notamment produits dans le procédé décrit dans la demande de brevet européen 0 603 218 [SOLVAY (Société Anonyme)] concernant l'épuration, au moyen de bicarbonate de sodium, des fumées générées dans les usines d'incinération de déchets ménagers ou hospitaliers. Sous l'effet de pluies atmosphériques, généralement acides, les métaux lourds contenus dans la masse de déchets 5 se dissolvent progressivement et migrent à l'état dissous dans l'eau, vers la couche de calcaire 4. Dans celle-ci la solution aqueuse est alcalinisée par le carbonate de calcium et les métaux lourds précipitent et sont ainsi retenus dans la couche 4. Le lixiviat qui s'échappe de la décharge par les drains 6 est ainsi exempt de métaux lourds.

En variante, la masse de déchets 5 peut être répartie en plusieurs lits successifs 5, 5', 5" alternant avec des couches de calcaire 4, 4'.

## Revendications

1. Procédé pour le stockage d'un résidu solide contenant des métaux lourds à l'état d'hydroxydes métalliques, insolubles dans l'eau, selon lequel on déverse le résidu dans une décharge soumise à des précipitations atmosphériques, **caractérisé en ce qu'**on sélectionne une décharge soumise à des pluies acides et on dispose dans la décharge, au-dessous du résidu solide, une couche de carbonate de métal alcalino-terreux, perméable à l'eau.

2. Procédé selon la revendication 1, **caractérisé en ce que** la couche de carbonate de métal alcalino-terreux est à l'état de fragments.

3. Procédé selon la revendication 2, **caractérisé en ce que** la couche de carbonate de métal alcalino-terreux est à l'état de fragments de 1 à 5 cm de diamètre.

4. Procédé selon l'une quelconque des revendications 1 à 3, **caractérisé en ce que** la couche a une composition réglée pour que de l'eau de pH initialement neutre présente, après traversée de ladite couche, une valeur de pH de 7 à 9,5.

5. Procédé selon l'une quelconque des revendications 1 à 4, **caractérisé en ce que** le carbonate de métal alcalino-terreux comprend du calcaire.

6. Procédé selon la revendication 5, **caractérisé en ce que** la couche de carbonate de métal alcalino-terreux est formée, au moins en partie, d'un rebut d'une opération d'enrichissement mécanique d'un minerai de calcaire.

7. Procédé selon l'une quelconque des revendications 1 à 6, **caractérisé en ce qu'**on dispose le résidu solide en lits successifs alternant avec des couches de carbonate de métal alcalino-terreux.

8. Procédé selon l'une quelconque des revendications 1 à 7, **caractérisé en ce qu'**on mélange un liant hydraulique au résidu solide.

9. Procédé selon l'une quelconque des revendications 1 à 8, **caractérisé en ce qu'**on dépose une feuille en matière plastique, étanche à l'eau, sur la paroi de la décharge, sous la couche de carbonate de métal alcalino-terreux.

10. Procédé selon l'une quelconque des revendications 1 à 9, appliqué au stockage d'un résidu solide provenant de l'alcalinisation d'une solution aqueuse de chlorure de sodium. contaminée par des métaux lourds.

## Patentansprüche

1. Verfahren zum Lagern eines festen Rückstands, der Schwermetalle in Form von wasserunlöslichen Metallhydroxiden enthält, gemäß dem man den Rückstand auf eine Deponie kippt, die atmosphärischen Niederschlägen unterliegt, **dadurch gekennzeichnet, dass** man eine Deponie auswählt, die saurem Regen unterliegt und man auf der Deponie unterhalb des festen Rückstands eine wasserdurchlässige Erdalkalimetallcarbonat-Schicht anbringt.

2. Verfahren gemäß Anspruch 1, **dadurch gekennzeichnet, dass** die Erdalkalimetallcarbonat-Schicht in Form von Bruchstücken vorliegt.

3. Verfahren gemäß Anspruch 2, **dadurch gekennzeichnet, dass** die Erdalkalimetallcarbonat-Schicht in Form von Bruchstücken mit 1 bis 5 cm Durchmesser vorliegt.

4. Verfahren gemäß einem der Ansprüche 1 bis 3, **dadurch gekennzeichnet, dass** die Schicht eine Zusammensetzung hat, die eingestellt ist, damit Wasser mit einem anfänglich neutralen pH nach Durchqueren besagter Schicht einen pH-Wert von 7 bis 9,5 aufweist.

5. Verfahren gemäß einem der Ansprüche 1 bis 4, **dadurch gekennzeichnet, dass** das Erdalkalimetallcarbonat Kalk umfasst.

6. Verfahren gemäß Anspruch 5, **dadurch gekennzeichnet, dass** die Erdalkalimetallcarbonat-Schicht wenigstens teilweise durch einen Abfall eines Vorgangs der mechanischen Anreicherung eines Kalkminerals gebildet wird.

7. Verfahren gemäß einem der Ansprüche 1 bis 6, **dadurch gekennzeichnet, dass** man den festen Rückstand in aufeinanderfolgenden Betten, abwechselnd mit Erdalkalimetallcarbonat-Schichten, aufbringt.

8. Verfahren gemäß einem der Ansprüche 1 bis 7, **dadurch gekennzeichnet, dass** man dem festen Rückstand ein hydraulisches Bindemittel zumischt.

9. Verfahren gemäß einem der Ansprüche 1 bis 8, **dadurch gekennzeichnet, dass** man auf der Deponiewand, unter der Erdalkalimetallcarbonat-Schicht eine wasserdichte Folie aus Kunststoffmaterial anbringt.

10. Verfahren gemäß einem der Ansprüche 1 bis 9, angewendet auf die Lagerung eines festen Rückstands, der von der Alkalisierung einer wässrigen mit Schwermetallen verunreinigten Natriumchloridlösung stammt.

## Claims

1. Method for the storage of a solid waste comprising heavy metals in the form of metal hydroxides which are insoluble in water, according to which the waste is tipped into a landfill site subjected to atmospheric precipitations, **characterized in that** a landfill site subjected to acid rain is selected and a layer of alkaline earth metal carbonate which is permeable to water is positioned in the landfill site below the solid waste.

2. Method according to Claim 1, **characterized in that** the layer of alkaline earth metal carbonate is in the form of fragments.

3. Method according to Claim 2, **characterized in that** the layer of alkaline earth metal carbonate is in the form of fragments with a diameter of 1 to 5 cm.

4. Method according to any one of Claims 1 to 3, **characterized in that** the layer has a composition adjusted in order for water with an initially neutral pH to exhibit, after passing through the said layer, a pH value of 7 to 9.5.

5. Method according to any one of Claims 1 to 4, **characterized in that** the alkaline earth metal carbonate comprises limestone.

6. Method according to Claim 5, **characterized in that** the layer of alkaline earth metal carbonate is formed, at least in part, of a waste material from an operation for the mechanical enrichment of a limestone ore.

7. Method according to any one of Claims 1 to 6, **characterized in that** the solid waste is positioned in successive beds alternating with layers of alkaline earth metal carbonate.

8. Method according to any one of Claims 1 to 7, **characterized in that** a hydraulic binder is mixed with the solid waste.

9. Method according to any one of Claims 1 to 8, **characterized in that** a waterproof plastic sheet is laid down on the wall of the landfill site under the layer of alkaline earth metal carbonate.

10. Method according to any one of Claims 1 to 9, applied to the storage of a solid waste originating from the basification of an aqueous sodium chloride solution contaminated by heavy metals.
